# EUROPÄISCHE PATENTSCHRIFT

(11) **EP 1 086 833 B1**
(45) Veröffentlichungstag und Bekanntmachung des Hinweises auf die Patenterteilung: **29.03.2006**
(21) Anmeldenummer: 00203275.3
(22) Anmeldetag: 22.09.2000
(51) Int. Cl.: B60C 11/22, B60C 3/06, B60C 3/00

(54) **Reifensystem**
Tyre system
Assemblage de bandages pneumatiques

(30) Priorität: 24.09.1999 NL 1013131; 01.10.1999 NL 1013197
(43) Veröffentlichungstag der Anmeldung: 28.03.2001
(73) Patentinhaber: Hollandse Bandenmarkt Internationaal B.V., 4691 RZ Tholen (NL)
(72) Erfinder: Van 't Hof, Leendert Arie, 4793 ZH Fijnaart (NL)
(74) Vertreter: De Hoop, Eric

(56) Entgegenhaltungen:
- DE-A- 2 803 134
- DE-A- 2 822 530
- DE-A- 3 907 074
- FR-A- 921 901
- FR-A- 1 530 603
- GB-A- 437 956
- US-A- 1 465 697
- US-A- 2 064 694
- US-A- 3 946 784
- PATENT ABSTRACTS OF JAPAN vol. 1998, no. 11, 30. September 1998 (1998-09-30) -& JP 10 151907 A (BRIDGESTONE CORP), 9. Juni 1998 (1998-06-09)
- PATENT ABSTRACTS OF JAPAN vol. 1999, no. 13, 30. November 1999 (1999-11-30) & JP 11 222002 A (NAGASE TADASHI), 17. August 1999 (1999-08-17)

## Beschreibung

Die Erfindung bezieht sich auf ein System von zumindest zwei Reifen, welche Reifen neu oder erneut sein können, mit Felge oder Felgen. Die Erfindung bezieht sich weiter auf einen Reifen, als Luftreifen oder als Volburnmireifen. Die Erfindung bezieht sich ebenfalls auf ein System von einem derartigen Reifen und einer Felge.

Aus DE-A-196 07 757 ist ein System von zwei Reifen und zwei Felgen bekannt, das an einem Ende einer Radachse montiert ist. Derartige bekannte Systeme werden zum Beispiel bei Hebebuhnen, mobilen Baggermaschinen, Industriefahrzeugen, Ackerwagen, Landbaumasehinen, Ackerschleppern (Treckern), Fahrzeugen für den Bergbau und Straßenbaumaschinen benutzt. Dia bekannten Systeme dienen dazu, die Nutzlast von Werkzeugen zu vergrößern und Einsinken von schwer beladenen Fahrzeugen in einen Unterboden zu verhindern. Das bekannte System hat als Nachteil daß sich ein offener Raum oder aber Spalt zwischen den beiden Laufflächen der Reifen - das sind die Oberflächen des Reifens die mit dem Boden in Kontakt stehen, befindet, wo das Material, zum Beispiel Ton oder Sand, aufhäufen kann. Dies spielt vor allem, wenn von einem sogenannten Zugreifen die Rede ist, der mit einer profilierten Lauffläche versehen ist. Hierdurch wird der Griff des bekannten Systems an Ort und Stelle und in der Nähe des Spaltes oder aber offenen Raums fast auf Null reduziert.

Es ist ein Ziel der Erfindung ein System zu verschaffen das hierin Verbesserung anbringt.

Aus einem Aspekt wird hierzu ein System von zumindest zwei Reifen, welche Reifen neu oder erneut sind, und einer ja oder nicht zusammengesetzten Felge verschafft, welches System auf einer Radachse zu montieren ist, wobei von neben einander gelegenen Reifen die Laufflächen von den zu einander gekehrten Wänden von dessen Reifen in den betreffenden Eckebereichen jede separat eine Ecke von hauptsächlich 90° bilden, wobei die Reifen an ihren zu einander gekehrten Wänden in einem Umfangsgebiet direkt stramm gegen einander anliegen, wobei das Umfangsgebiet auf den Laufflächen anschließt.

Hierdurch gibt es keinen Spalt oder offenen Raum mehr zwischen den beiden Laufflächen der Reifen, wodurch der Griff des Systems auf einen Unterboden erhöht wird. Auch wird die Kontaktoberfläche der Reifen mit dem Boden erhöht, wodurch das Fahrzeug weniger schnell in einen weichen Boden einsinken wird. Die Stabilität des Systems wird erhöht dadurch daß die Last über zwei oder mehrere komplette Reifen, die über einen großen Teil der Oberfläche von ihren zu einander gekehrten Wänden oder Wangen anliegen, direkt oder indirekt, verteilt wird.

Vorzugsweise sind die Laufflächen von neben einander gelegenen Reifen in derselben durchgehenden Reifensystemlauffläche gelegen. Alternativ umschrieben liegt anschließend am Umfangsgebiet die Lauffläche parallel zu der Herzlinie der Felge. Hierdurch wird eine hauptsächlich flache Lauffläche bekommen.

Vorzugsweise erstreckt das obengenannte Umfangsgebiet sich über einen beträchtlichen Teil der Wand.

Also liegen die Reifen an ihren zu einander gekehrten Wänden stramm an über die hauptsächlich ganze Oberfläche von den zu einander gekehrten Wänden der Reifen, bis ihre Lauffläche. Hierdurch wird die Stabilität des Systems stark erhöht, so daß das Fahrzeug beträchtlich minder Pendelbewegungen machen wird als zum Beispiel bei Benutzung eines großen Reifens von nahezu denselben Abmessungen am Ende einer Radachse. Bei Benutzung eines großen Reifens kann das Fahrzeug dass auf diesen Reifen stützt nämlich pendeln, wodurch der Fahrer sich seekrank fühlen kann. Diesem Effekt wird durch das Anliegen der Wände wesentlich entgegengetreten.

Bemerkt wird, daß aus der amerikanischen Patenschrift 2.064.694 ein Reifensystem bekannt ist, wobei auf einem Felgesystem zwei Reifen angeordnet sind, die nur an Ort und Stelle der - rechten - Schulterränder gegen einander anliegen und an Ort und Stelle der Wangen/Wände der Reifen auf Abstand von einander liegen, wodurch die Stabilität für Benutzung in großen Werkzeugen, wie Erdbewegungsmaschinen, ungenügend ist.

In einer weiteren Ausführungsform des Systems, wird diese gekennzeichnet dadurch daß die Laufflächen der Reifen mit einem Profil versehen sind und vorzugsweise schließen die Profile der Reifen fließend an einander an. Hierdurch bildet das System sozusagen einen breiten Profilband.

Vorzugsweise haben gegen einander gelegene Reifen ein verschiedenes Profil. Die Profile der gegen einander gelegenen Reifen können dabei spiegelungsgleich sein. Die Profile der Reifen können einander dabei zu einem Profil von üblicher Form ergänzen, insbesondere ein Profil mit einer hauptsächlich Fischgrätstruktur, das heißt ein Profil das hinsichtlich einander divergierende Rippen oder Erhebungen oder aber Schlitze hat. So kann man eigentlich über einen Reifen verfügen, der mit einem einzigen breiten Profilband zu vergleichen ist, aber aus zwei gegenseitig verschiedenen Reifen besteht.

Vorzugsweise bildet die Lauffläche mit beiden Seitenwänden eine Ecke von hauptsächlich 90 Grad. Hiermit wird eine so groß mögliche Lauffläche erhalten, unter optimal stabilen Bedingungen.

In einer anderen Ausbildung hat der Reifen einen asymmetrischen Querdurchschnitt. Ein derartiger Reifen kann als äußerster oder innerster Reifen in dem System gemäß der Erfindung benutzt werden.

Vorzugsweise ist der Reifen auf seiner Lauffläche mit einem Profil versehen und vorzugsweise ist der Reifen dann mit einem Kennzeichen versehen zum in Umfangsrichtung bestimmbar Positionieren von dem Reifen auf der Felge. Durch ein derartiges Kennzeichen wird es ermöglicht den Reifen derartig auf der Felge zu montieren, daß zwei oder mehr von derartigen Reifen ein System wie oben umschrieben bilden, wobei die Profile fließend in einander übergehen.

Auch verschafft die Erfindung ein Reifen offensichtlich bestimmt für Anwendung in einem System wie oben umschrieben.

Einige Ausführungsbeispiele der Erfindung werden hiernach beispielsweise an Hand der Zeichnungen beschrieben werden. Gezeigt werden in:
Figur 1 ein schematischer Querdurchschnitt eines Ausführungsbeispiels eines Systems von zwei Reifen mit Felgen gemäß der Erfindung;
Figur 2 eine Vorderansicht eines Ausführungsbeispiels der Lauffläche eines an sich asymmetrischen Reifens, mit einem Zugprofil versehen; und
Figur 3 eine Vorderansicht eines Systems von zwei Reifen wie in Figur 2 gezeigt.

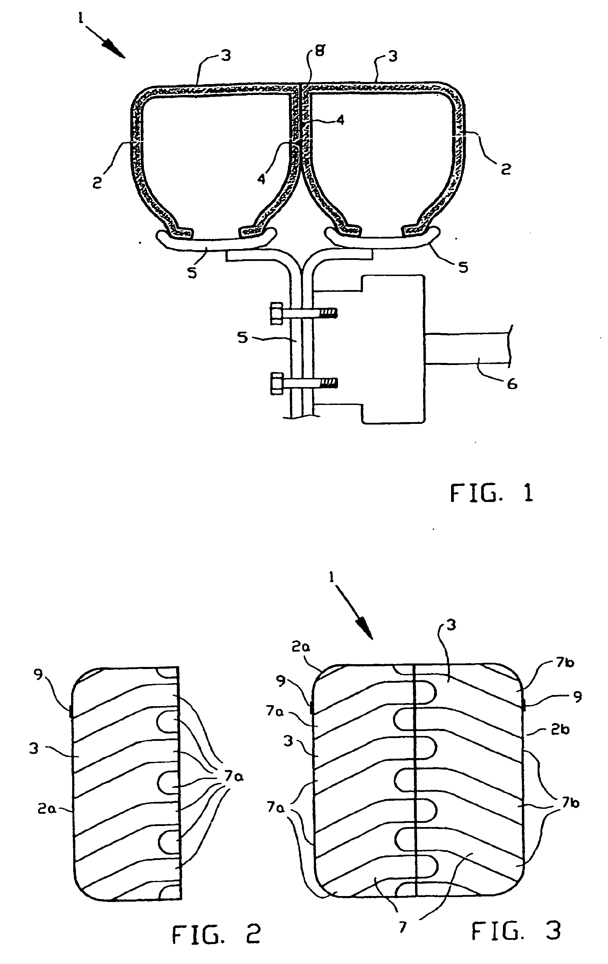

Figur 1 zeigt ein System 1 von zwei Reifen 2,2, welche Reifen 2,2 an ihren zu einander gekehrten Wänden 4,4 auf direkte Weise stramm in einem Umfangsgebiet 8 anliegen, wobei das Umfangsgebiet 8 auf den Laufflächen 3,3 anschließt. Hierdurch gibt es erstens an dem Umfang keinen / kaum einen Spalt mehr zwischen den Laufflächen 3,3 der Reifen 2,2 wodurch der Griff des Systems 1 auf einem Unterboden stark erhöht wird. Es kann sich ja kein Bodenmaterial, zum Beispiel Schlamm, mehr in einem Spalt aufhäufen. Auch wird, dadurch daß es keinen Spalt oder offenen Raum mehr gibt, die mögliche Kontaktoberfläche der Reifen 2,2 mit dem Boden maximal wodurch das Fahrzeug weniger schnell in einen weichen Boden einsinken wird. Innerhalb von dem axialen Raum wird die Oberfläche optimal benutzt. In dem System 1 bilden die Laufflächen 3,3 mit den zu einander gekehrten Wänden 4.4 jede separat eine Ecke von hauptsächlich 90°. Die Laufflächen 3,3 sind hier also horizontal.

Aus Figur 1 geht hervor, daß die Reifen 2,2 an ihren zu einander gekehrten Wänden 4,4, die die Luftkammer begrenzen, stramm über fast ihre ganze Oberfläche anliegen. Die Reifen 2,2 sind an sich asymmetrisch in Durchschnitt und können separat für Transport des Fahrzeuges von dem einen zu dem anderen Einsatzort benutzt werden. Für die Ausführung einer Arbeit wird es jedoch erforderlich sein um mehrere Reifen bei einander zu stellen, wie in der wiedergegebenen Aufstellung. In der Figur 1 sind weiter die Felgen 5,5 gezeigt, welche stramm gegen einander angeordnet sind und auf übliche Weise mit dem Ende einer Radachse 6 verbunden sind.

In Figur 2 ist eine Vorderansicht eines Ausführungsbeispiels der Lauffläche 3 eines an sich in Durchschnitt asymmetrischen Reifens 2a mit einem Profil 7a versehen, wiedergegeben. Das hier gezeigte Profil 7a des Zugreifens 2a ist an sich auch asymmetrisch, aber auch kann das Profil des Reifens zum Beispiel an sich symmetrisch ausgeführt werden (nicht gezeigt).

In der Figur 3 ist eine Vorderansicht eines Systems 1 von zwei Reifen 2a,2b gezeigt, wobei Reifen 2a der Reifen von Figur 2 ist. Der Reifen 2a ist ein linker Reifen und der Reifen 2b ein rechter Reifen, wofür eine separate Form erforderlich ist. Nach dem gegen einander Setzen der Reifen 2a, 2b und eine halbe Teilung hinsichtlich der Wiedergabe von Figur 3 verdreht, könnte man die Profile spiegelungsgleich nennen. In der montierten Lage von Figur 3 sind die Reifen 2a,2b jedoch derartig hinsichtlich einander gestellt, daß sozusagen ein großes Zugreifenprofil 7 erhalten ist. Das fließend in einander übergehen lassen der Profile 7a, 7b wird ermöglicht durch das im Umfangsrichtung Positionieren der Reifen 2a, 2b auf ihren Felgen 5,5. Dies geschieht durch ein Kennzeichen 9,9 auf jedem der Reifen 2a,2b anzubringen, und dieses Kennzeichen 9,9 bei Montage des Reifens 2 auf der Felge 5, zum Beispiel in der Umfangsrichtung der Felge 5 auf der Höhe von der Öffnung für das Ventil in der Felge 5, anzuordnen. Auf diese Weise sind zwei Reifen 2a,2b mit ihren Felgen 5,5 zu einem System 1 zusammenzubauen, wobei garantiert ist, daß die Profile 7a,7b fließend in einander übergehen.

Es gibt jetzt sozusagen einen breiten Reifen mit einer doppelten Zwischenwand 4,4, weil die Reifen 2a, 2b an ihren zu einander gekehrten Wänden stramm bis zu ihren Laufflächen 3,3 anliegen und weil die Lautflächen 3,3 mit den zu einander gekehrten Wänden jede separat eine Ecke von 90° bilden und eine durchgehende Lauffläche erhalten ist.

## Patentansprüche

1. System (1) von zumindest zwei Reifen (2,2), welche Reifen neu oder erneut sind, und einer ja oder nicht zusammengesetzten Felge (5), welches System auf einer Radachse (6) zu montieren ist, wobei von neben einander gelegenen Reifen die Laufflächen (3,3) mit den zueinander gekehrten Wänden (4,4) in den betreffenden Eckbereichen jeweils einen Winkel von im wesentlichen 90° bilden, **dadurch gekennzeichnet, daß** die Reifen an ihren zu einander gekehrten Wänden in einem Umfangsgebiet direkt stramm gegeneinander anliegen, wobei das Umfangsgebiet an die Laufflächen (3,3) anschließt.

2. System (1) gemäß Anspruch 1, wobei die Laufflächen (3,3) von neben einander gelegenen Reifen (2,2) in derselben durchgehenden Reifensystemlauffläche gelegen sind.

3. System (1) gemäß Anspruch 1 oder 2, wobei das obengenannte Umfangsgebiet sich über einen signifikanten Teil der Wand erstreckt.

4. System (1) gemäß Anspruch 1, 2 oder 3, wobei die Laufflächen (3,3) der Reifen mit einem Profil (7a,7b) versehen sind, die vorzugsweise fließend an einander anschließen.

5. System (1) gemäß Anspruch 4, wobei gegen einander gelegene Reifen (2,2) ein unterschiedliches Profil (7a,7b) haben.

6. Systems (1) gemäß Anspruch 5, wobei die Profile (7a,7b) von den gegen einander gelegenen Reifen (2,2) spiegelungsleich sind.

7. System (1) gemäß Anspruch 5 oder 6, wobei die Profile (7a,7b) der beiden Reifen (2,2) ein Profil von üblicher Form ergänzen, insbesondere ein Profil mit einer Fischgrätstruktur (7).

8. System (1) gemäß einem der vorabgehenden Ansprüche, wobei zumindest einer der Reifen (2,2) zum bestimmten Positionieren in Umfangsrichtung des Reifens auf der Felge (5) mit einem Kennzeichen (9) versehen ist.

9. System (1) gemäß einem der vorabgehenden Ansprüche, wobei jeder Reifen (2,2) einen Querdurchschnitt hat, worin die Lauffläche (3,3) mit beiden Seitenwänden einen winkel von im wesentlichen 90° bildet.

10. System (1) gemäß einem der vorabgehenden Ansprüche, wobei jeder Reifen (2,2) auf seiner Lauffäche (3,3) mit einem Profil (7a,7b) versehen ist, wobei jeder Reifen in Durchschnitt asymmetrisch ist.

## Claims

1. Assembly (1) of at least two tires (2, 2), said tires being new or renewed, and a rim (5) which is either composite or not, said assembly being mountable onto a wheel axis, wherein in the respective corner areas the tread surfaces (3, 3) of adjacent tires each separately form an angle of substantially 90 degrees with the walls (4, 4) of these tires which walls face one another, **characterized in that** in a circumferential area the tires abut one another tightly at the walls facing one another, wherein the circumferential area connects to the tread surfaces (3, 3).

2. Assembly (1) according to claim 1, wherein the tread surfaces (3, 3) of adjacent tires (2, 2) are located in the same continuous tire assembly tread surface.

3. Assembly (1) according to claim 1 or 2, wherein the afore-mentioned circumferential area extends over a significant portion of the wall.

4. Assembly (1) according to claim 1, 2 or 3, wherein the tread surfaces (3, 3) of the tires are provided with a profile (7a, 7b), which profiles preferably connect smoothly to one another.

5. Assembly (1) according to claim 4, wherein the tires (2, 2) lying against one another have a different profile (7a, 7b).

6. Assembly (1) according to claim 5, wherein the profiles (7a, 7b) of tires (2, 2) lying against one another are mirror-shaped.

7. Assembly (1) according to claim 5 of 6, wherein the profiles (7a, 7b) of both tires (2, 2) supplement one another to a profile of usual form, in particular a profile having a herringbone structure (7).

8. Assembly (1) according to any one of the preceding claims, wherein at least one of the tires (2, 2) is provided with a mark (9) for defined positioning in circumferential direction of the tire on the rim (5).

9. Assembly (1) according to any one of the preceding claims, wherein each tire (2, 2) has a cross-section, in which the tread surface (3, 3) forms an angle of substantially 90 degrees with both side walls.

10. Assembly (1) according to any one of the preceding claims, wherein each tire (2, 2) is provided with a profile (7a, 7b) on its tread surface (3, 3), wherein each tire is a-symmetrical in cross-section.

## Revendications

1. Système (1) d'au moins deux pneus (2,2), lesquels pneus sont neufs ou renouvelés, et d'une jante (5) assemblée ou non assemblée, lequel système doit être monté sur un essieu de roues, de sorte que les surfaces de roulement (3,3) de pneus montés côte-à-côte forment un chacune séparément angle de sensiblement 90° avec les flancs (4,4) de ces pneus dans les zones de coin respectives, lesquels flancs sont en regard l'un de l'autre, **caractérisé en ce que** les pneus s'appuient directement rigidement l'un sur l'autre sur leurs flancs en regard l'un de l'autre dans une zone périphérique, tandis que la zone périphérique se raccorde aux bandes de roulement.

2. Système (1) selon la revendication 1, dans lequel les bandes de roulement (3,3) de pneus (2,2) juxtaposés sont positionnées dans la même bande de roulement continue du système de pneus.

3. Système (1) selon la revendication 1 ou 2, dans lequel la zone périphérique précitée s'étend sur une partie importante du flanc.

4. Système (1) selon la revendication 1, 2 ou 3, dans lequel les bandes de roulement (3,3) des pneus sont dotées d'un profil (7a,7b), ces profils se fondant de préférence de façon fluide l'un à l'autre.

5. Système (1) selon la revendication 4, dans lequel les pneus (2,2) juxtaposés présentent un profil différent.

6. Système (1) selon la revendication 5, dans lequel les profils (7a, 7b) des pneus (2,2) juxtaposés sont identiques par symétrie-miroir.

7. Système (1) selon la revendication 5 ou 6, dans lequel les profils (7a,7b) des deux pneus (2,2) juxtaposés complètent un profil de configuration usuelle, en particulier un profil ayant une structure en arête de poisson (7).

8. Système (1) selon l'une des revendications précédentes, dans lequel au moins l'un des pneus (2,2) est muni d'une marque distinctive (9) pour le positionnement déterminé dans le sens de rotation du pneu sur la jante (6).

9. Système (1) selon l'une des revendications précédentes, dans lequel chaque pneu (2,2) présente une section transversale, dans laquelle la bande de roulement (3,3) forme un angle de sensiblement 90° avec les deux flancs latéraux.

10. Système (1) selon l'une des revendications précédentes, dans lequel chaque pneu (2,2) présente un profil (7a, 7b) sur sa bande de roulement (3,3), de sorte que chaque pneu est de section asymétrique.
